Europäisches Patentamt

(19) European Patent Office

Office européen des brevets

(11) Numéro de publication : **0 169 756**
**B1**

(12) **FASCICULE DE BREVET EUROPÉEN**

(45) Date de publication du fascicule du brevet :
09.08.89

(21) Numéro de dépôt : 85401235.8

(22) Date de dépôt : 20.06.85

(51) Int. Cl.⁴ : **H 02 J 9/06, H 02 M 5/451**

(54) **Dispositif d'alimentation électrique stabilisée.**

(30) Priorité : 20.06.84 FR 8409664

(43) Date de publication de la demande :
29.01.86 Bulletin 86/05

(45) Mention de la délivrance du brevet :
09.08.89 Bulletin 89/32

(84) Etats contractants désignés :
AT DE GB IT SE

(56) Documents cités :
FR-A- 2 544 924
TELCOM REPORT, vol. 4, no. 2, Avril 1981, pages 118-121, Passau, DE; B. BRAKUS: "Getakteter modulierter Wechselrichter für unterbrechungsfreie 50-Hz-Wechselstromversorgung"
Static UPS- much more than just stand-by power"
Control and Instrumentation, October 1978, p.67,69.

(73) Titulaire : **MOTEURS LEROY-SOMER (Société Anonyme française)**
**Bld. Marcellin-Leroy**
**F-16015 AngoulemeCedex (FR)**

(72) Inventeur : **Nacabal, Michel**
**38, Espace Saint Martial**
**F-16000 Angouleme (FR)**

(74) Mandataire : **Nony, Michel et al**
**Cabinet Nony 29, rue Cambacérès**
**F-75008 Paris (FR)**

EP 0 169 756 B1

## Description

La présente invention est relative à un dispositif d'alimentation électrique stabilisée du type à onduleur statique, destiné à alimenter en permanence un appareillage ou une installation électrique sans perturbation lors de modifications de la tension fournie par le réseau de distribution d'énergie électrique, notamment lors de coupures ou de microcoupures apparaissant sur le réseau.

De tels dispositifs d'alimentation sont utilisables pour une très large plage d'applications où il est nécessaire d'alimenter sans risque de coupure un appareillage ou une installation électrique en courant alternatif monophasé ou triphasé présentant une qualité d'onde sensiblement constante.

A titre d'application particulière, on peut citer les systèmes informatiques pour lesquels des coupures de courant peuvent avoir des conséquences particulièrement dommageables au niveau du stockage des informations.

Des dispositifs connus de ce type comprennent un onduleur statique alimenté en permanence par une batterie maintenue, en régime normal, en floating par un redresseur-chargeur relié au réseau. La tension d'entrée de l'onduleur est donc égale à la tension batterie qui peut varier de 30 % environ entre les deux états extrêmes, c'est-à-dire, chargée et complètement déchargée. Un tel dispositif est décrit dans « static UPS-much more than just stand-by power » Control and Instrumentation, Octobre 1978, pages 67, 69.

D'autres dispositifs connus consistent à alimenter un onduleur statique par un redresseur connecté au réseau, en régime normal, et à commuter l'onduleur sur une batterie maintenue en floating par un chargeur indépendant. Dans certains cas, cette solution peut être améliorée, notamment lorsque la tension batterie est basse et que l'on désire un bon rendement, par l'interposition d'un convertisseur continu/continu entre la batterie et l'onduleur. Mais même dans ce cas, l'onduleur est soumis aux fluctuations de la tension réseau qui varie couramment de ± 15 %.

Dans tous les cas, et sans tenir compte d'autres paramètres tels que la chute de tension en ligne de l'onduleur due au courant de charge, il est indispensable de surdimensionner l'onduleur de 30 % environ.

D'autre part ces dispositifs génèrent des harmoniques de courant qui sont réinjectés dans le réseau et font croître le taux de distorsion jusqu'à 30 % de façon courante.

La présente invention se propose de fournir un dispositif d'alimentation électrique stabilisé de secours qui tout en utilisant des composants plus simples et plus économiques que les dispositifs antérieurs permet d'éviter notamment les inconvénients mentionnés ci-dessus, et d'absorber des variations d'amplitude encore plus élevées de la tension d'entrée, les variations admises pouvant être de l'ordre de ± 50 %.

Le dispositif selon l'invention se caractérise essentiellement par le fait qu'il comprend en série, en amont de l'onduleur, un hacheur-survolteur, l'onduleur et le hacheur-survolteur étant commandés par un système de régulation agissant séparément sur le hacheur-survolteur et l'onduleur pour, d'une part réguler, l'amplitude de la tension continue de sortie du hacheur-survolteur qui alimente l'onduleur en tension continue d'amplitude sensiblement constante, de façon à maintenir sensiblement constante, l'amplitude de la tension alternative de sortie de l'onduleur et d'autre part pour réguler la fréquence de l'onduleur, de façon à maintenir sensiblement constante, la fréquence de la tension alternative de sortie de l'onduleur.

Grâce à la présente invention, l'onduleur est toujours alimenté en tension continue d'amplitude sensiblement constante, fournie par le hacheur-survolteur, lui-même alimenté en tension continue dont l'amplitude peut varier fortement. Le hacheur-survolteur selon l'invention est en effet alimenté en tension continue d'amplitude relativement élevée par le réseau de distribution, en fonctionnement normal, au travers du redresseur d'entrée et, en cas de coupure, en tension continue d'amplitude relativement basse par la batterie d'accumulateurs.

Dans la mesure où, selon l'invention, grâce à la présence du hacheur-survolteur la tension d'entrée de l'onduleur est maintenue à une valeur pratiquement constante, on peut utiliser pour la mise en oeuvre de l'invention un onduleur très simplifié en ce qui concerne ses composants, notamment ses composants de puissance. De plus, le hacheur-survolteur, par son principe, permet d'éliminer presque complètement les harmoniques de courant réinjectés habituellement sur le réseau.

Le gain en dimensionnement des composants de l'onduleur est de 30 % environ, c'est-à-dire qu'avec les mêmes composants on obtient une puissance de l'installation de 30 % supérieure à la puissance obtenue de façon classique. De plus, l'onduleur n'assure plus de régulation d'amplitude de la tension de sortie, celle-ci étant prise en charge par le hacheur-survolteur.

Un hacheur-survolteur étant par nature un dispositif plus simple qu'un onduleur statique, il est beaucoup plus facile à adapter à de fortes variations de la tension d'entrée par un simple surdimensionnement de son interrupteur unique.

Dans le but de mieux faire comprendre l'invention, on va maintenant en décrire à titre d'exemple, en aucune manière limitatif, un mode de réalisation en se référant au dessin annexé dans lequel :

la figure 1 est un schéma de circuit illustrant le dispositif selon l'invention,

la figure 2 est un schéma de circuit détaillant un système de régulation utilisable dans le dispositif de l'invention.

Le dispositif d'alimentation selon l'invention relié à son entrée 1 au réseau de distribution électrique alternatif, monophasé ou triphasé, comprend un pont redresseur 2 recevant le courant électrique alternatif du réseau et convertissant l'onde de tension sinusoïdale de celui-ci en tension continue faiblement ondulée dans sa ligne de sortie 3. Une alimentation électrique de secours est fournie par une batterie d'accumulateurs 4 dont le maintien en charge est assuré par un redresseur chargeur 5 relié au réseau 1 par un transformateur abaisseur 6. La batterie 4 est reliée à la ligne 3 par l'intermédiaire d'un interrupteur statique 7 contrôlé ou non contrôlé.

Les caractéristiques de l'interrupteur statique 7, de préférence contrôlé, sont déterminées de manière que celui-ci soit bloqué en fonctionnement normal lorsque la tension de la batterie 4 est inférieure à la tension fournie à partir du réseau par le pont redresseur 2 dans la ligne 3, c'est-à-dire que l'interrupteur statique est bloqué lorsque le réseau est présent, et conducteur lorsque le réseau est hors tolérances.

En cas de coupure du réseau, l'interrupteur statique 7 devient conducteur et la batterie 4 se décharge à travers lui dans la ligne 3.

Selon l'invention la ligne 3 recevant du courant, soit du réseau 1, soit de la batterie 4, est connectée à un hacheur-survolteur 8 lui-même relié à un onduleur statique 9 par sa ligne de sortie 10.

La ligne de sortie 11 de l'onduleur 9 est reliée à la sortie 12 du dispositif, elle-même reliée à un appareillage ou une installation électrique à alimenter en tension alternative stabilisée.

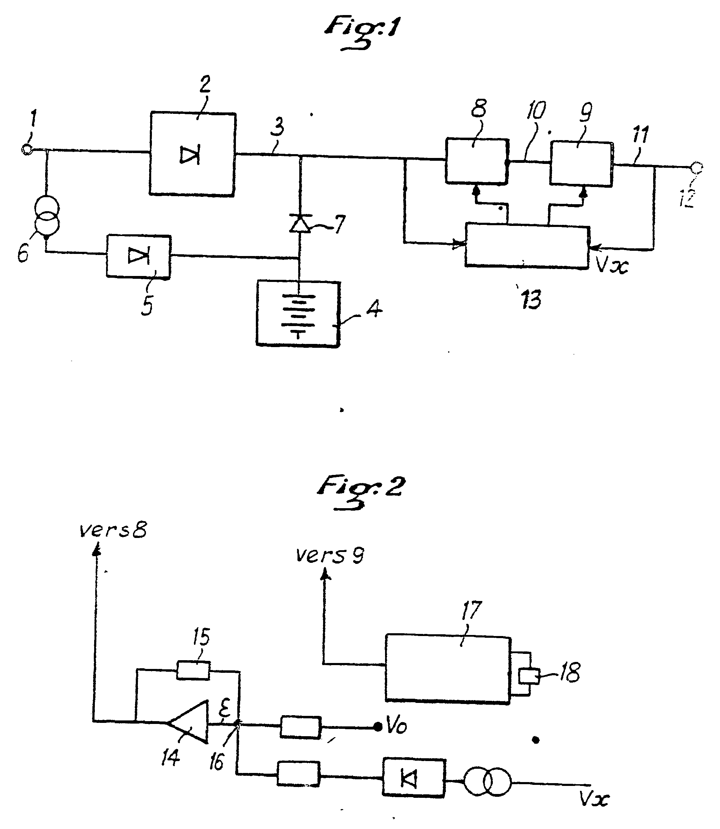

Selon l'invention il est prévu un système de régulation 13 dont un exemple de réalisation est illustré à la figure 2.

Le système de régulation est agencé pour agir sélectivement sur le hacheur 8 et sur l'onduleur 9 de façon à commander, d'une part l'amplitude de la tension de sortie délivrée par le hacheur-survolteur dans sa ligne de sortie 10 vers l'onduleur, et d'autre part la fréquence de la tension de sortie de l'onduleur 9 dans sa ligne de sortie 11.

La commande d'amplitude s'effectue à partir de la comparaison de la tension Vx prélevée dans la ligne ou bus de sortie 11 de l'onduleur à une tension de référence fixe Vo générée dans le système de régulation.

Pour obtenir l'ordre de commande vers le hacheur-survolteur 8 on utilise un amplificateur 14 muni d'une contre-réaction de stabilisation 15 recevant un signal de tension d'erreur ε au point 16 et correspondant à la différence obtenue dans un sommateur conventionnel, des signaux de tension Vx et Vo.

L'ordre de commande en fréquence de l'onduleur 9 est délivré par un diviseur de fréquence 17 associé à un oscillateur à quartz 18.

Le hacheur-survolteur, pour une application monophasée, peut être constitué d'une self en série avec le redresseur 2 connecté au réseau, d'un interrupteur statique commandé permettant, pendant sa phase de conduction, l'accumulation de l'énergie dans la self, d'une diode et d'un condensateur dans lequel est transférée, lors de la phase de blocage de l'interrupteur, l'énergie emmagasinée dans la self.

Dans la période de présence du réseau, la référence de courant du hacheur-survolteur est constituée d'une suite d'alternances redressées en phase avec le réseau. Dans ces conditions l'allure du courant fourni par le réseau est quasi-sinusoïdale.

Dès que le réseau disparaît, la référence de courant du hacheur-survolteur est alors une constante qui dépend de la régulation d'amplitude et dans ces conditions le courant extrait de la batterie 4 est un courant continu quasiment pur.

Ce type de hacheur-survolteur peut être aisément construit pour des systèmes polyphasés. Par exemple, en triphasé on pourrait utiliser un pont complet triphasé à six interrupteurs avec des selfs dans l'entrée alternative.

Le cas échéant, le dispositif selon l'invention peut être associé à un transformateur d'entrée et/ou de sortie de façon à assurer un isolement galvanique complet vis-à-vis du réseau et/ou de l'appareillage ou de l'installation à alimenter.

**Revendications**

1. Dispositif d'alimentation électrique stabilisée, du type comprenant un onduleur statique (9) alimenté en régime normal par le réseau de distribution d'énergie électrique au travers d'un redresseur (2) et, en cas de défaillance du réseau, par une batterie d'accumulateurs (4) associée à un chargeur de batterie (5) relié au réseau, caractérisé par le fait qu'il comprend en série, en amont de l'onduleur (9), un hacheur-survolteur (8), l'onduleur et le hacheur-survolteur étant commandés par un système de régulation (13) agissant séparément sur le hacheur-survolteur et l'onduleur pour, d'une part réguler l'amplitude de la tension continue de sortie du hacheur-survolteur qui alimente l'onduleur en tension continue d'amplitude sensiblement constante, de façon à maintenir sensiblement constante l'amplitude de la tension alternative de sortie de l'onduleur, et d'autre part pour réguler la fréquence de l'onduleur de façon à maintenir sensiblement constante la fréquence de la tension alternative de sortie de l'onduleur.

2. Dispositif selon la revendication 1, caractérisé par le fait que la batterie d'accumulateurs (4) est reliée à la ligne (3), reliant l'entrée du hacheur-survolteur (8) au redresseur (2) recevant le courant du réseau, par un interrupteur statique contrôlé (7).

**Claims**

1. Stabilized electrical power supply device, of the type comprising a static inverter (9) fed at normal rating by the electrical power distribution grid via a rectifier (2) and, in the event of failure of the grid, by a battery of accumulators (4) which is associated with a battery charger (5) connected to the grid, characterized in that it comprises in series, upstream of the inverter (9), a chopper-booster (8), the inverter and the chopper-booster being controlled by a regulating system (13) acting separately on the chopper-booster and the inverter, on the one hand to regulate the amplitude of the output direct current voltage of the chopper-booster which feeds the inverter with direct current voltage of substantially constant amplitude, in such a manner as to maintain the amplitude of the output alternating current voltage of the inverter substantially constant, and on the other hand to regulate the frequency of the inverter in such a manner as to maintain the frequency of the output alternating current voltage of the inverter substantially constant.

2. Device according to Claim 1, characterized in that the battery of accumulators (4) is connected to the line (3), connecting the input of the chopperbooster (8) to the rectifier (2) receiving the current from the grid, by a controlled static switch (7).


**Patentansprüche**

1. Stabilisierte elektrische Stromversorgung mit einem Wechselrichter (9), der bei Normalbetrieb vom Stromversorgungsnetz über einen Gleichrichter (2) und im Falle des Ausfalls des Netzes von einer Akkumulatorbatterie (4) versorgt wird, die an einen Batterielader (5) angeschlossen ist, der mit dem Netz verbunden ist, dadurch gekennzeichnet, daß sie in Reihenschaltung vor dem Wechselrichter (9) einen spannungserhöhenden Zerhacker (8) aufweist, wobei der Wechselrichter und der spannungserhöhende Zerhacker einem Regelsystem (13) unterliegen, das getrennt auf den spannungserhöhenden Zerhacker und den Wechselrichter einwirkt, um zum einen die Gleichspannungsamplitude am Ausgang des spannungserhöhenden Zerhackers zu regeln, der den Wechselrichter mit einer Gleichspannung im wesentlichen konstanter Amplitude versorgt, um die Amplitude der Wechselspannung am Ausgang des Wechselrichters im wesentlichen konstant zu halten, und um zum anderen die Frequenz des Wechselrichters so zu regeln, daß die Frequenz der Wechselspannung am Ausgang des Wechselrichters im wesentlichen konstant bleibt.

2. Stromversorgung nach Anspruch 1, dadurch gekennzeichnet, daß die Akkumulatorbatterie (4) mit derjenigen Leitung (3) über einen geregelten Schalter (7) verbunden ist, die den Eingang des spannungserhöhenden Zerhackers (8) mit dem Gleichrichter (2) verbindet, der den Strom aus dem Netz erhält.

Fig.1

Fig.2